# EUROPEAN PATENT APPLICATION

(11) **EP 1 914 654 A2**
(43) Date of publication of application: **23.04.2008**
(21) Application number: 07107560.0
(22) Date of filing: 04.05.2007
(51) Int. Cl.: G06F 21/00

(54) **Method and apparatus for providing digital rights management content and license, and method and apparatus for using digital rights management content**

(30) Priority: 20.10.2006 KR 20060102478
(71) Applicant: Samsung Electronics Co., Ltd., Suwon-si, Gyeonggi-do 442-742 (KR)
(72) Inventor: Kim, Myung-sun, Gyeonggi-do (KR); Moon, Ji-young, Gyeonggi-do (KR); Seo, Ju-hee, Seoul (KR); Park, Mi-hwa, Dongan-gu, Gyeonggi-do (KR)
(74) Representative: Robinson, Ian Michael

(57) **Abstract**

A method and apparatus for providing digital rights management (DRM) content (10) and a license (20), and a method and apparatus for using DRM content (10) are provided. The method of providing DRM content (10) and a license (20) includes selecting usage conditions for content (10); transforming the usage conditions into a secure database (DB); and adding the secure DB to a license (20). The method of using DRM content (10) generated by applying DRM includes searching for a license (20) corresponding to the DRM content (10); authenticating a user who wants to use the DRM content (10); extracting usage conditions included in the license (20) by using a secure DB agent, and confirming whether or not an action desired to be performed by the user satisfies the usage conditions; and if the action desired to be performed by the user satisfies the usage conditions, using the DRM content (10) according to the action.

## Description

Apparatuses and methods consistent with the present invention relate to digital data processing, and more particularly, to providing and using content to which digital rights management (DRM) is applied.

With the establishment of a worldwide wireless infrastructure and widespread penetration of mobile communication terminals, distribution of mobile content (digital content) has increased greatly. The mobile content indicates all digital content services provided to wireless terminals, and is generally classified into games, music, information, images, characters, and publications. Participants in entertainment, distribution, communication and hardware industries are involved in the distribution of mobile content.

Meanwhile, since the mobile content is in digital form, it is necessary to prevent illegal use or distribution of the content and to control use of the content. DRM is a technology supporting the generation, distribution and management of content, including safely protecting the rights and profits of a content provider, preventing illegal copying, imposing royalties and performing a settlement agent role.

In the related art DRM technology, a license includes a usage condition which is information on condition of use and allows a machine or person to read content. In order to prevent modification of the condition, a digital signature is added and then transmitted. If a user obtains a license to access DRM content, the DRM system examines the usage condition specified in the license, and applies an action performed by the user to a secure storage area which is implemented by the DRM system. Examples of this secure storage area include Windows Media DRM (WMDRM) and Open Mobile Alliance DRM (OMA DRM).

However, the related art technology lacks a standardized method of safely managing the usage condition. Accordingly, authentication of a secure storage area is possible, but authorization is impossible. In addition, management of a secure storage area is complicated and has a problem in its security.

According to the present invention there is provided an apparatus and method as set forth in the appended claims. Preferred features of the invention will be apparent from the dependent claims, and the description which follows.

The present invention provides a method and apparatus for providing DRM content and license, capable of safely managing a usage condition in the DRM, and enabling authorization of a secure storage area and a computer readable recording medium having embodied thereon a computer program for executing the method.

The present invention also provides a method and apparatus for using the generated DRM content, and a computer readable recording medium having embodied thereon a computer program for executing the method.

In order to achieve the technical objects, the present invention provides a standardized storage structure capable of managing the usage condition, an agent and its application program interface (API) for managing the standardized storage structure, and various types of license binding.

A scenario of providing and using content according to the exemplary embodiments of the present invention includes issuing DRM content and license, a user obtaining the DRM content, and the user using the DRM content.

In the issuing of the DRM content and license, first, a content provider (CP) selects content that is to be distributed and the usage condition for the content, selects a predetermined DRM system, and then, by using a packaging function of the DRM system, the CP adds the usage condition to the license in the form of a secure database (DB) storage area when packaging is performed, thereby generating DRM content and a license therefor.

The user obtains the DRM content in a variety of ways.

When the user uses the DRM content, first, the user obtains a DRM agent for processing the DRM content, and it is examined whether the DRM content requires a license. If the license is required, the user obtains the license. When the DRM agent accesses the usage condition of the license, control is passed to a secure DB agent of the DRM agent, and authentication and authorization of the identity of the user trying to access the usage condition is verified. Information on whether or not the DRM content is used is notified and the DRM agent notifies the action of the user to the secure DB agent. Then, changed contents of the usage condition are recorded in the secure DB agent.

According to an aspect of the present invention, there is provided a method of providing DRM content encrypted by applying DRM, and a license, the method including: selecting usage conditions for content; transforming the usage conditions into a secure DB; and adding the secure DB to a license.

According to another aspect of the present invention, there is provided a method of providing DRM content and a license including: selecting content to be encrypted by applying DRM; selecting usage conditions for the selected content; generating a content key for encrypting the selected content; encrypting the content by using the content key, thereby generating DRM content; transforming the usage conditions into a secure DB; and generating a license including the content key and the secure DB.

According to another aspect of the present invention, there is provided an apparatus for providing DRM content encrypted by applying DRM, and a license, the apparatus including: a storage unit which stores content to which DRM is to be applied, and usage conditions for the content; a DRM content generation unit which encrypts the content and generates DRM content; a license generation unit which transforms the usage conditions into a secure DB and adds the secure DB to the license; and a communication unit which transmits the DRM content and license to a user of the DRM content.

According to another aspect of the present invention, there is provided a method of using DRM content generated by applying DRM, the method including: searching for a license corresponding to the DRM content; authenticating a user who wants to use the DRM content; extracting usage conditions included in the license by using a secure DB agent, and confirming whether or not an action desired to be performed by the user, satisfies the usage conditions; and if the action desired to be performed by the user satisfies the usage conditions, using the DRM content according to the action.

According to another aspect of the present invention, there is provided an apparatus for using DRM content generated by applying DRM, the apparatus including: a storage unit which stores the DRM content and a license corresponding to the DRM content; an access control unit which authenticates a user who wants to use the DRM content; a secure DB agent which extracts usage conditions included in the license, and confirms whether or not an action that a user desires to perform, satisfies the usage conditions; and a content using unit which uses the DRM content according to the action if the action satisfies the usage conditions.

The above and other features and aspect of the present invention will become more apparent by describing in detail exemplary embodiments thereof with reference to the attached drawings in which:
Figure 1 is a diagram illustrating a structure of an apparatus for providing digital rights management (DRM) content and a license according to an exemplary embodiment of the present invention;
Figure 2 is a diagram illustrating a structure of an apparatus for using DRM content according to an exemplary embodiment of the present invention;
Figure 3 is a diagram illustrating a license engine according to an exemplary embodiment of the present invention;
Figures 4A and 4B are diagrams illustrating formats of DRM content generated by a method of providing DRM content and a license according to an exemplary embodiment of the present invention;
Figure 5 is a diagram illustrating a format of a license generated by a method of providing DRM content and a license according to an exemplary embodiment of the present invention;
Figure 6 is a flowchart illustrating processes of generating, transmitting and using DRM content and a license according to an exemplary embodiment of the present invention;
Figure 7 is a flowchart illustrating a method of generating DRM content and a license according to an exemplary embodiment of the present invention;
Figure 8 is a flowchart illustrating a method of transmitting DRM content and a license according to an exemplary embodiment of the present invention; and
Figures 9A and 9B are flowcharts illustrating a method of using DRM content according to an exemplary embodiment of the present invention.

The present invention will now be described more fully with reference to the accompanying drawings, in which exemplary embodiments of the invention are shown.

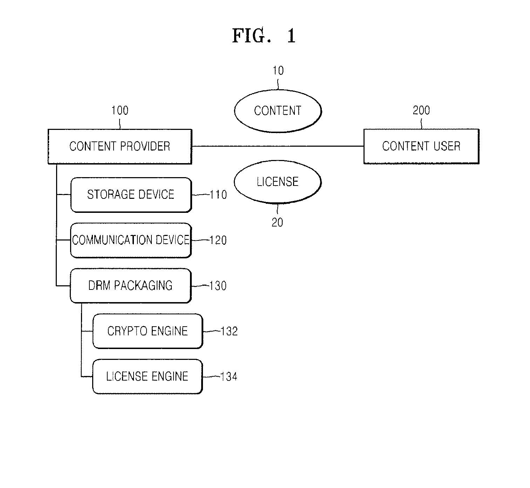

Figure 1 is a diagram illustrating a structure of an apparatus for providing DRM content and a license according to an exemplary embodiment of the present invention. Referring to Figure 1, an apparatus for providing DRM content and a license is shown as a CP 100.

The CP 100 generates encrypted DRM content 10 and a license 20, and provides the DRM content 10 and license 20 to a user, i.e., a content user 200, of the DRM content 10.

Referring to Figure 1, the CP 100 may include a storage device 110, a communication device 120 and a DRM packaging unit 130.

The storage device 110 stores content to which the DRM is applied, and usage condition.

The communication device 120 transmits the generated DRM content 10 and license 20 to the user 200 of the DRM content.

The DRM packaging unit 130 performs DRM for the content. In order to achieve this, the DRM packaging unit 130 may include a crypto engine 132 and a license engine 134.

The crypto engine 132 encrypts content and generates the DRM content. The crypto engine illustrated in Figure 1 corresponds to a DRM content generation unit according to an exemplary embodiment of the present invention.

The license engine 134 generates a license 20 required when the DRM content is used. The license engine 134 illustrated in Figure 1 corresponds to a license generation unit according to an exemplary embodiment of the present invention.

In particular, the license generation unit according to the present exemplary embodiment transforms the usage condition for the content into a secure database (DB) form and adds the secure DB to the license.

The secure DB is a database allowing security of data included in the database to be maintained. For this, each data item is encrypted. Also, access conditions for the database are determined for each individual user.

In the present exemplary embodiment, the usage conditions for content are included in a license in a secure DB form. Accordingly, it is possible to apply a different usage condition to each user. That is, authorization of usage conditions of DRM content for each user is enabled.

In this case, the applying of the different usage condition to each user includes applying a different usage condition to each individual, and also includes applying a different usage condition to each group after dividing users into a plurality of groups.

For example, a usage condition can be set so that a user B can reproduce DRM content A, which is encrypted moving pictures, only five times. Meanwhile, another usage condition can be set so that a user C can reproduce the DRM content A ten times and copy the DRM content A five times.

Also, for example, a usage condition can be set so that users included in group D can only reproduce the DRM content A, while users included in group E can reproduce and copy the DRM content A.

A license may include a content key for decrypting corresponding DRM content and a usage condition specifying a condition under which a user can use DRM content.

In an exemplary embodiment of the present invention, a license generation unit encrypts a content key and adds the encrypted content key to a license.

In another exemplary embodiment of the present invention, a license generation unit adds a content key to a secure DB and adds the secure DB including the content key, to a license.

The DRM packaging unit 130 may further include a content key generation unit (not shown) for generating a content key to be encrypted.

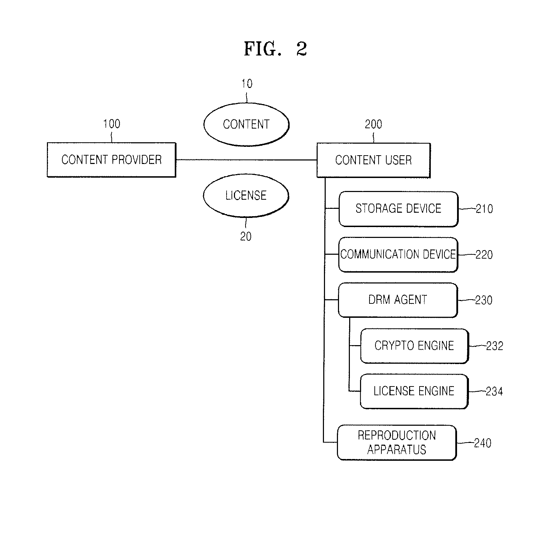

Figure 2 is a diagram illustrating a structure of an apparatus for using DRM content according to an exemplary embodiment of the present invention. In Figure 2, the apparatus for using DRM content is shown as a consumer 200.

The apparatus for using DRM content according to the current exemplary embodiment receives DRM content 10 and a license 20 from a CP 100, i.e., a DRM content and license providing apparatus, and uses the DRM content 10 and license 20.

Referring to Figure 2, the apparatus for using DRM content according to the current exemplary embodiment includes a storage device 210, a communication device 220, a DRM agent 230 and a reproduction apparatus 240.

The storage device 210 stores the DRM content 10 and license 20.

The communication device 220 receives the DRM content 10 and license 20 from the CP 100. The DRM agent 230 decrypts the DRM content 10, by applying DRM. The DRM agent 230 may include a crypto engine 232 and a license engine 234.

The crypto engine 232 decrypts encrypted content and if a content key is encrypted, decrypts the content key.

The license engine 234 manages the license 20, and confirms whether or not an action desired to be performed by a user satisfies a usage condition included in the license 20.

The reproduction apparatus 240 reproduces the decrypted content. The reproduction apparatus 240 is an exemplary embodiment of a content using unit according to the exemplary embodiments of the present invention. If an action that a user desires to perform satisfies the usage condition, the content using unit uses the decrypted DRM content according to the action.

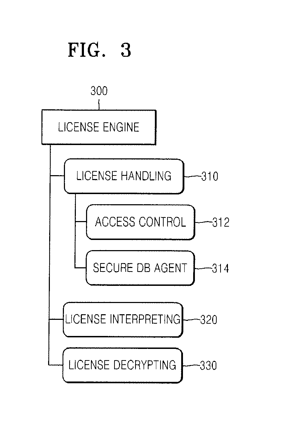

Figure 3 is a diagram illustrating a license engine according to an exemplary embodiment of the present invention. Referring to Figure 3, the license engine 300 may include a license handling unit 310, a license interpreting unit 320 and a license decrypting unit 330.

The license handling unit 310 performs authentication and authorization of the user in relation to the content by using the license 20. In order to achieve this, the license handling unit 310 may include an access control unit 312 and a secure DB agent 314.

The access control unit 312 performs authentication of the user who wants to use the DRM content 10.

The secure DB agent 314 extracts the usage condition from the license formed with a secure DB, and confirms whether or not the action that a user desires to perform satisfies the usage condition.

As described above, the condition to access to data in the secure DB is determined in relation to each user or each user group.

For example, the CP 100 can divide users into two groups, group D and group E, and impose different usage fees. It is assumed that group D can reproduce the DRM content 10 while group E can reproduce and copy the DRM content 10.

If a user F included in group E wants to copy the DRM content 10, a process as described below is performed.

First, the access control unit 312 performs authentication of the user F, thereby confirming the identity of the user F and confirming that the user F belongs to group E.

The secure DB agent 314 extracts the usage condition corresponding to group E from the secure DB included in the license 20. The usage condition for group E would state, "Both reproduction and copying of content are possible."

Accordingly, the secure DB agent 314 confirms that "copying of content" which is the action that the user F desires to perform satisfies the usage condition that both reproduction and copying of content are possible.

Meanwhile, if a user G included in group D wants to copy the DRM content 10, a process as described below is performed.

First, the access control unit 312 performs authentication of the user G, thereby confirming the identify of the user G and confirming that the user G belongs to group D.

The secure DB agent 314 extracts the usage condition corresponding to group D from the secure DB included in the license 20. The usage condition for group G would state, "Only reproduction of content is possible." Accordingly, the secure DB agent 314 confirms that "copying of content" which is the action that the user G desires to perform does not satisfy the usage condition that only reproduction of content is possible.

According to the present exemplary embodiment, setting different usage conditions in relation to each user or each user group is thus enabled, thereby enabling authorization of a user to use content.

The license interpreting unit 320 interprets the contents of the license 20. The secure DB agent 314 transfers the extracted usage condition to the license interpreting unit 320, and makes the license interpreting unit 320 interpret the meaning of the usage condition, thereby identifying the contents of the license 20.

In regard to the license decrypting unit 330, a content key included in the license 20 is encrypted and transferred to the crypto engine 232 so that the crypto engine 232 can decrypt the content key. In this way, the license decrypting unit 330 extracts the decrypted content key.

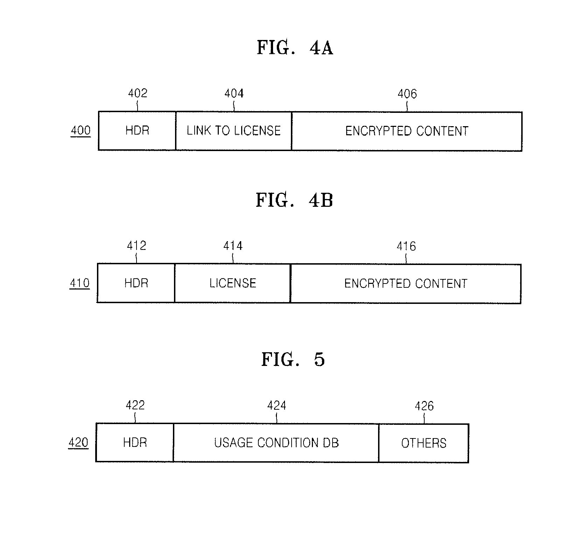

Figures 4A and 4B are diagrams illustrating formats of DRM content generated by a method of providing DRM content and a license according to an exemplary embodiment of the present invention.

Figure 4A illustrates a DRM format including a link to a license. In this case, the DRM content 400 includes a header 402, a link 404 to the license, and encrypted content 406.

When the DRM content 400 includes the link 404 to the license, the DRM content and the license can be transmitted to the content user 200 through separate channels. For example, the DRM content 400 is first transmitted to the content user 200, and then, when the content user 200 wants to use the DRM content 400, the license can be transmitted to the content user 200.

Figure 4B illustrates a DRM content format when DRM content includes a license. In this case, the DRM content 410 includes a header 412, a license 414, and encrypted content 416.

Figure 5 is a diagram illustrating a format of a license generated by a method of providing DRM content and a license according to an exemplary embodiment of the present invention.

Referring to Figure 5, the license 420 includes a header 422, a usage condition secure DB 424 and other data 426. Examples of the other data 426 include a content key when the content key is not included in the secure DB 424.

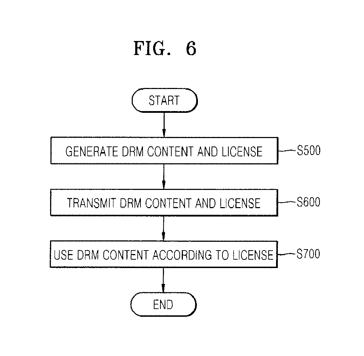

Figure 6 is a flowchart illustrating processes of generating, transmitting and using DRM content and a license according to an exemplary embodiment of the present invention.

Referring to Figure 6, the processes of generating, transmitting and using DRM content and a license may include an operation S500 for generating DRM content and a license on a CP side, an operation S600 for transmitting the DRM content and license from the CP 100 to a user, and an operation S700 in which the user uses the DRM content according to the license.

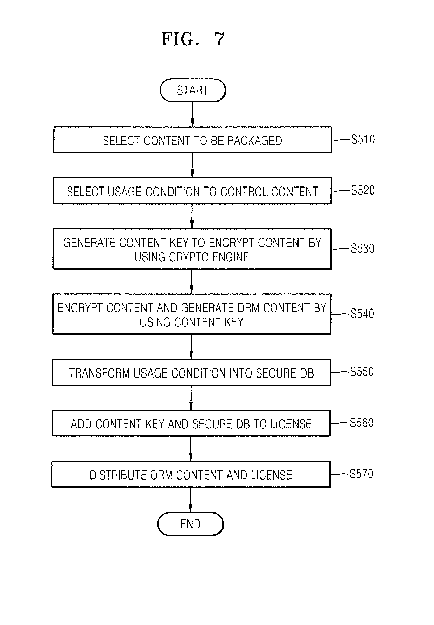

Figure 7 is a flowchart illustrating a method of generating DRM content and a license according to an exemplary embodiment of the present invention.

A content providing apparatus 100 first selects content that is to be packaged, from a storage unit in operation S510, and selects a usage condition for controlling usage of the content in operation S520. The packaging is a process of encrypting the content by applying DRM and other required data into one package. For example, the DRM content illustrated in Figure 4A is a result of packaging.

A crypto engine 132 generates a content key for encrypting the content in operation S530, encrypts the content by using the content key, thereby generating the DRM content in operation S540.

A license engine 134 transforms a usage condition into a secure DB in operation S550, and adds the secure DB and the content key to a license in operation S560. A communication unit 120 distributes the generated DRM content and license in operation S570.

In the adding of the secure DB and the content key to the license, the content key may be added to the secure DB, or may be encrypted by using information unique to the content, and then, added to the license.

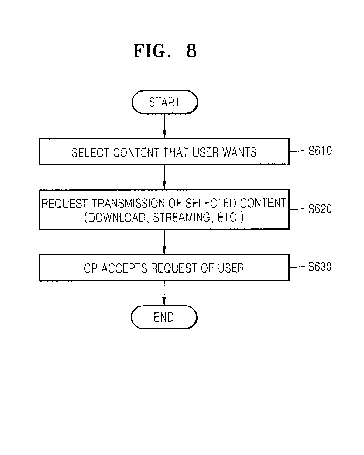

Figure 8 is a flowchart illustrating a method of transmitting DRM content and a license according to an exemplary embodiment of the present invention.

A content user 200 selects content that is desired to be used in operation S610, and requests a CP 100 to transmit the selected content in operation S620.

If the CP 100 accepts the request of the content user 200 in operation S630, DRM content is transmitted to the content user 200. At this time, a license corresponding to the DRM content may be transmitted together with the DRM content, or may be transmitted through a channel separate from a channel through which the DRM content is transmitted.

Transmitting of the license corresponding to the DRM content may occur in two cases. The first case is when the license is included in the DRM content as illustrated in Figure 4B. The second case is when the DRM content and the license are generated as separate objects, but transmitted together through the same channel.

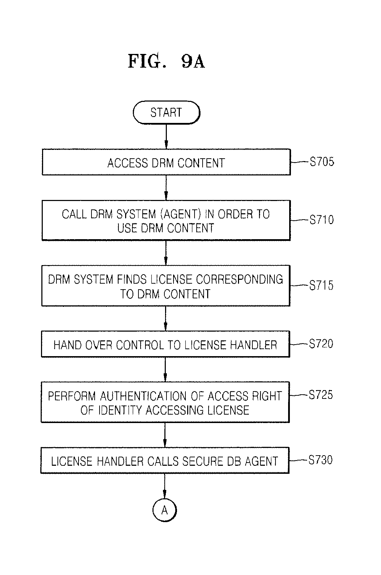

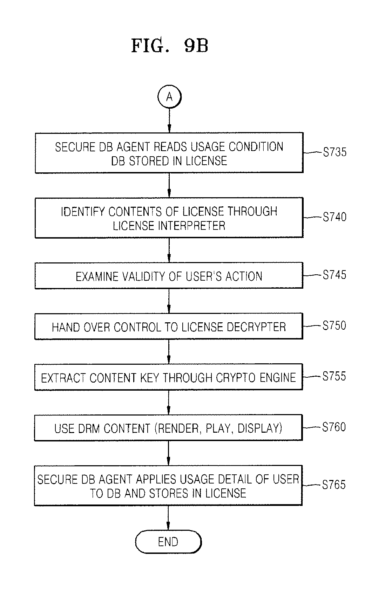

Figures 9A and 9B are flowcharts illustrating a method of using DRM content according to an exemplary embodiment of the present invention.

DRM content provided by a CP 100 is stored in a storage device 210. If a user accesses the DRM content in order to use the DRM content in operation S705, a DRM agent 230 is called in order to use the DRM content in operation S710. The DRM system described by Figure 9A corresponds to the DRM agent 230.

The DRM system searches for a license corresponding to the DRM content in operation S715.

If DRM content and a license are transmitted at the same time by the CP 100, the license is stored in the storage device 210. The DRM system confirms the location of the license stored in the storage device 210.

If the license is not provided, a communication device 220 receives the license transmitted by the CP 100. In the example illustrated in Figure 4A, the DRM content 400 includes the link 404 to the license. The communication device 220 can receive the license by using the link to the license.

After the license is found, control is transferred to a license handling unit 310 in operation S720. The license handling unit 310 first calls an access control unit 312, and performs authentication of the identify of the user accessing the DRM content in operation S725.

After the user is authenticated, the license handling unit 310 calls a secure DB agent 314 in operation S730. The secure DB agent 314 reads the usage condition DB stored in the license, extracts the usage condition in relation to the authenticated user in operation S735, and identifies the contents of the usage condition through a license interpreting unit 320 in operation S740.

Then, the secure DB agent 314 examines whether or not an action that the user desires to perform is valid, that is, the action satisfies the usage condition in operation S745. If the action that the user desires to perform is not valid, use of the DRM content is stopped (not shown).

If the action that the user desires to perform satisfies the usage condition, control is transferred to the license decrypting unit 330 in operation S750.

The license decrypting unit 330 extracts a content key through a crypto engine 232 in operation S755, and uses the decrypted DRM content according to the action that the user desires to perform in operation S760.

Finally, the secure DB agent 314 applies the usage details of the user to the secure DB, and stores the modified secure DB in the license in operation S765.

The following is an example of applying of the usage details. If a user B has a usage condition specifying, "Content can only be reproduced five times ", and reproduction of the content is once performed, the usage condition is modified to" Content can only be reproduced four times."

The method and apparatus for providing DRM content and a license, and the method and apparatus for using DRM content according to the exemplary embodiments of the present invention have the following effects.

First, the usage conditions for content are included in a license in the form of a secure DB, and thus a DRM solution provider does not need to provide a separate secure storage area.

Secondly, since the usage conditions are in the form of a secure database, whether or not to permit actions differentiated in relation to each user can be determined. That is, authorization of the DRM content is enabled. Accordingly, effective binding of users, applications and devices is enabled.

Also, encryption and decryption of usage conditions are performed by a secure DB agent, thereby decreasing the amount of computation necessary for performing encryption and decryption.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing digital rights management (DRM) content (10) encrypted by applying DRM, and a license (20), the method comprising:
selecting usage conditions for content (10);
transforming the usage conditions into a secure database (DB); and
adding the secure DB to a license (20).

2. The method of claim 1, further comprising adding a content key used for encrypting the content (10), to the license (20).

3. The method of claim 2, wherein the adding of the content key to the license (20) comprises encrypting the content key and adding the encrypted content key to the license (20).

4. The method of claim 2, wherein the adding of the content key to the license (20) comprises:
adding the content key to the secure DB; and
adding the secure DB including the content key to the license (20).

5. A method of providing digital rights management (DRM) content (10) and a license (20) comprising:
selecting content (10) to be encrypted by applying DRM;
selecting usage conditions for the selected content (10);
generating a content key for encrypting the selected content (10);
encrypting the content (10) by using the content key, thereby generating DRM content (10);
transforming the usage conditions into a secure DB; and
generating a license (20) including the content key and the secure DB.

6. The method of claim 5, wherein the generating of the license (20) comprises:
encrypting the content key; and
adding the encrypted content key to the license (20).

7. The method of claim 5, wherein the generating of the license (20) comprises:
adding the content key to the secure DB; and
adding the secure DB to the license (20).

8. The method of claim 5, further comprising transmitting the generated DRM content (10) and license (20) to a user of the DRM content (10).

9. The method of claim 8, wherein the transmitting of the DRM content (10) and license (20) to the user comprises transmitting the license (20) through a channel separate from a channel through which the DRM content (10) is transmitted.

10. The method of claim 9, wherein the DRM content (10) includes a link to the license (20).

11. An apparatus (100) for providing digital rights management (DRM) content (10) encrypted by applying DRM, and a license (20), the apparatus (100) comprising:
a storage unit (110) which stores content (10) to which DRM is to be applied, and usage conditions for the content (10);
a DRM content generation unit which encrypts the content (10) and generates DRM content (10);
a license generation unit (134) which transforms the usage conditions into a secure database (DB) and adds the secure DB to the license (20); and
a communication unit (120) which transmits the DRM content (10) and license (20) to a user of the DRM content (10).

12. The apparatus (100) of claim 11, wherein the license generation unit (134) adds a content key used for encrypting the content (10), to the license (20).

13. The apparatus (100) of claim 12, wherein the license generation unit (134) encrypts the content key and adds the content key to the license (20).

14. The apparatus (100) of claim 12, wherein the license generation unit (134) adds the content key to the secure DB, and adds the secure DB including the content key, to the license (20).

15. The apparatus (100) of claim 11, wherein the communication unit (120) transmits the DRM content (10) and the license (20) to the user of the DRM content (10) through separate channels.

16. The apparatus (100) of claim 15, wherein the DRM content (10) includes a link to the license (20).

17. A method of using digital rights management (DRM) content (10) generated by applying DRM, the method comprising:
searching for a license (20) corresponding to the DRM content (10);
authenticating a user who wants to use the DRM content (10);
extracting usage conditions included in the license (20) by using a secure database (DB) agent, and confirming whether or not an action desired to be performed by the user, satisfies the usage conditions; and
if the action desired to be performed by the user satisfies the usage conditions, using the DRM content (10) according to the action.

18. The method of claim 17, wherein the searching for the license (20) corresponding to the DRM content (10) comprises:
extracting a link to the license (20) included in the DRM content (10); and
fetching the license (20) corresponding to the DRM content (10), by using the link.

19. An apparatus (200) for using digital rights management (DRM) content (10) generated by applying DRM, the apparatus (200) comprising:
a storage unit (210) which stores the DRM content (10) and a license (20) corresponding to the DRM content (10);
an access control unit (312) which authenticates a user who wants to use the DRM content (10);
a secure database (DB) agent (314) which extracts usage conditions included in the license (20), and confirms whether or not an action that the user desires to perform, satisfies the usage conditions; and
a content using unit (240) which uses the DRM content (10) according to the action if the action satisfies the usage conditions.

20. A computer readable recording medium having embodied thereon a computer program for executing a method of providing digital rights management (DRM) content (10) encrypted by applying DRM, and a license (20), wherein the method comprises:
selecting usage conditions for the DRM content (10);
transforming the usage conditions into a secure database (DB); and
adding the secure DB to the license (20).

21. A computer readable recording medium having embodied thereon a computer program for executing a method, wherein the method comprises:
selecting content (10) to be encrypted by applying digital rights management (DRM);
selecting usage conditions for the selected content (10);
generating a content key for encrypting the selected content (10);
encrypting the content (10) by using the content key, thereby generating DRM content (10);
transforming the usage conditions into a secure database (DB); and
generating a license (20) including the content key and the secure DB.

22. A computer readable recording medium having embodied thereon a computer program for executing a method of using digital rights management (DRM) content (10) generated by applying DRM, wherein the method comprises:
searching for a license (20) corresponding to the DRM content (10);
authenticating a user who wants to use the DRM content (10);
extracting usage conditions included in the license (20) by using a secure database (DB) agent (314), and confirming whether or not an action that the user desires to perform, satisfies the usage conditions; and
if the action that the user desires to perform satisfies the usage conditions, using the DRM content (10) according to the action.
